# EUROPEAN PATENT APPLICATION

(11) **EP 2 752 803 A1**
(43) Date of publication of application: **09.07.2014**
(21) Application number: 14150188.2
(22) Date of filing: 06.01.2014
(51) Int. Cl.: G06Q 30/02

(54) **Performing actions using visual search**

(30) Priority: 08.01.2013 US 201361750206 P; 08.05.2013 US 201313889972
(71) Applicant: Ricoh Company, Ltd., Tokyo 143-8555 (JP)
(72) Inventor: Chand, Ashootosh, 560001 Bangalore (IN); Singh, Tarkeshwar, 560001 Bangalore (IN); Gupta, Adit, 560001 Bangalore (IN)
(74) Representative: Maury, Richard Philip

(57) **Abstract**

The disclosure includes a system (100) and method for performing actions using visual search. The system includes a controller (202), an image recognition module (204) and a polling engine (210). The controller (202) receives data describing an image that is associated with a poll from a first user. The image recognition module (204) identifies the image as being an option that is selected by the first user for the poll. The polling engine (210) associates the option selected by the first user and a first set of demographic information describing the first user with the poll. The polling engine provides the first user with polling data that describes one or more voting results for the poll. The polling data includes a second set of demographic information associated with one or more second users that provided an answer to the poll.

## Description

### BACKGROUND OF THE INVENTION

### 1. Field of the Invention

The specification relates to a system and method for applying image recognition in various scenarios. In particular, the specification relates to systems and methods for performing actions using visual search.

### 2. Description of the Background Art

Existing surveys or polls conducted on a printed newspaper or magazine require participants to fill out a form or send a message including the answers to a predetermined phone number or email address. This process is cumbersome and does not allow much interaction among the participants and creators of the surveys. For example, a participant cannot conveniently view a result for the survey and interact with other participants.

Existing approaches using banners to advertise a deal for a product or a company are inflexible. For example, a deal displayed in a banner may be outdated because the deal offered by the company has been modified over time. In another example, a banner may display the same deal for all the users and fail to personalize the deal for different users.

### SUMMARY OF THE INVENTION

The system overcomes the deficiencies of the prior art with a system for performing actions using visual search. In one embodiment, the system includes a controller, an image recognition module and a polling engine. The controller receives data describing an image that is associated with a poll from a first user. The image recognition module identifies the image as being an option that is selected by the first user for the poll. The polling engine associates the option selected by the first user and a first set of demographic information describing the first user with the poll. The polling engine provides the first user with polling data that describes one or more voting results for the poll. The polling data includes a second set of demographic information associated with one or more second users that provided an answer to the poll.

In another embodiment, the system includes a controller, a location engine, an inventory module and an advertisement engine. The controller receives data describing an image of an advertisement associated with a company from a user. The location engine identifies a first location associated with the user. The inventory module identifies an inventory at a second location of the company. The advertisement engine generates a deal for the user for a fixed time period based on the inventory and a user profile describing the user. The user profile includes one or more user preferences obtained from a social network and demographic information associated with the user.

In one embodiment, the controller receives data describing an image of an advertisement from a user. The location engine identifies a first location associated with the user. The inventory module identifies a company associated with the advertisement and an inventory at a second location of the company. The advertisement engine generates a first deal for the user based on the first location of the user, the inventory and a conversion rate of other users who obtain a historic deal from the company.

The system is particularly advantageous in numerous respects. First, the system is capable of providing an interactive polling experience to users that participate in polls conducted in a printed media. For example, the system allows a user to explain his or her rationale for making choices in the polls, to view and/or reply to comments posted by other users and to view live voting results filtered by different categories, etc. The system can monetize the polls by providing personalized advertisements to users that participate in the polls. For example, the system is capable of providing advertisements to the users based on one or more of demographic information, user preferences and the users' selections in the polls. The system can increase a lifetime of a poll because users can continue to view and reply to comments even after the polling period expires.

Second, the system is capable of personalizing deals for a user based on one or more of demographic information associated with the user, personal interests, an inventory, the time of the day and user preferences. The system allows a vendor to optimize discounts in real time based on one or more of an inventory, a target time to clear the inventory and a number of prospective purchasers, etc.

Third, the system is capable of creating a discount model that personalizes deals for a user based on a distance between the user's location and a location of a vendor. The discount model allows a vendor to optimize discounts and clear an inventory while maximizing the profit. For example, a discount model enables a vendor to offer higher discounts to users farther away from the vendor's location than users close by the vendor's location, attracting both close-by users and farther-away users to turn into actual purchasers. The discount model includes a combination of different discounts for users from different location ranges, so that an optimum number of purchasers can be achieved without leading to an unsold inventory or a failure to meet customer demand.

### BRIEF DESCRIPTION OF THE DRAWINGS

The invention is illustrated by way of example, and not by way of limitation in the figures of the accompanying drawings in which like reference numerals are used to refer to similar elements.
Figure 1 is a high-level block diagram illustrating one embodiment of a system for performing actions using visual search.
Figure 2 is a block diagram illustrating one embodiment of a recognition application.
Figures 3A-3G are graphic representations of embodiments of user interfaces for conducting a poll using visual search.
Figures 3H-3J are graphic representations of different embodiments of user interfaces for providing dynamic deals to users using visual search.
Figures 3K-3M are graphic representations of different embodiments of user interfaces for conducting a poll using visual search.
Figure 3N is a graphic representation of one embodiment of one or more location ranges in a catchment area for a location associated with a vendor.
Figure 4 is a flow diagram of one embodiment of a method for performing actions using visual search.
Figure 5 is a flow diagram of one embodiment of a method for conducting a poll using visual search.
Figure 6 is a flow diagram of one embodiment of a method for providing a dynamic deal to a user that is valid for a fixed time period.
Figure 7 is a flow diagram of one embodiment of a method for providing a dynamic deal to a user based on a location associated with the user.

### DETAILED DESCRIPTION OF THE PREFERRED EMBODIMENTS

A system and method for performing actions using visual search are described below. In the following description, for purposes of explanation, numerous specific details are set forth in order to provide a thorough understanding of the invention. It will be apparent, however, to one skilled in the art that the embodiments can be practiced without these specific details. In other instances, structures and devices are shown in block diagram form in order to avoid obscuring the invention. For example, the invention is described in one embodiment below with reference to user devices such as a smart phone and particular software and hardware. However, the description applies to any type of computing device that can receive data and commands, and any peripheral devices providing services.

Reference in the specification to "one embodiment" or "an embodiment" means that a particular feature, structure, or characteristic described in connection with the embodiment is included in at least one embodiment. The appearances of the phrase "in one embodiment" in various places in the specification are not necessarily all referring to the same embodiment.

Some portions of the detailed descriptions that follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The invention also relates to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic disks, read-only memories (ROMs), random access memories (RAMs), EPROMs, EEPROMs, magnetic or optical cards, flash memories including USB keys with non-volatile memory or any type of media suitable for storing electronic instructions, each coupled to a computer system bus.

Some embodiments can take the form of an entirely hardware embodiment, an entirely software embodiment or an embodiment containing both hardware and software elements. A preferred embodiment is implemented in software, which includes but is not limited to firmware, resident software, microcode, etc.

Furthermore, some embodiments can take the form of a computer program product accessible from a computer-usable or computer-readable medium providing program code for use by or in connection with a computer or any instruction execution system. For the purposes of this invention, a computer-usable or computer readable medium can be any apparatus that can contain, store, communicate, propagate, or transport the program for use by or in connection with the instruction execution system, apparatus, or device.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem and Ethernet cards are just a few of the currently available types of network adapters.

Finally, the algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description below. In addition, the specification is not described with reference to any particular programming language. It will be appreciated that a variety of programming languages may be used to implement the teachings of the various embodiments as described herein.

### System Overview

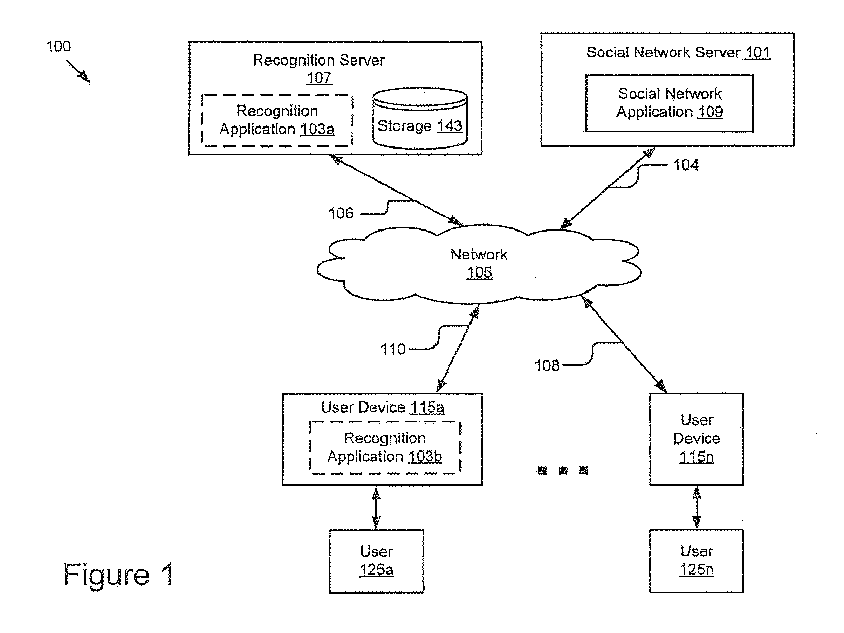

Figure 1 illustrates a block diagram of a system 100 for performing actions using visual search according to one embodiment. The illustrated system 100 includes user devices 115a...115n that can be accessed by users 125a...125n, a social network server 101 and a recognition server 107. In Figure 1 and the remaining figures, a letter after a reference number, e.g., "115a," represents a reference to the element having that particular reference number. A reference number in the text without a following letter, e.g., "115," represents a general reference to instances of the element bearing that reference number. In the illustrated implementation, these entities of the system 100 are communicatively coupled via a network 105.

The user devices 115a, 115n in Figure 1 are used by way of example. While Figure 1 illustrates two user devices 115a and 115n, the disclosure applies to a system architecture having one or more user devices 115. Furthermore, although Figure 1 illustrates one network 105 coupled to the user devices 115, the social network server 101 and the recognition server 107, in practice one or more networks 105 can be connected to these entities.

The social network server 101 can be a hardware server that includes a processor, a memory and network communication capabilities, which is coupled to the network 105 via signal line 104. In some implementations, the social network server 101 sends and receives data to and from one or more of the user devices 115a, 115n and the recognition server 107 via the network 105. The social network server 101 also includes a social network application 109. A social network tracks users that share something in common. For example, people in the social network can be friends, they can follow each other, the social network can include a forum where people discuss a particular topic, etc. In one embodiment, the social network can include a user profile that lists interests that the user explicitly or implicitly provided. For example, the user implicitly added an interest to a user profile page or the social network application 109 implicitly added an interest to the user profile based on the user joining a group, endorsing articles about particular subjects, etc. Furthermore, the social network server 101 may be representative of one social network and there may be multiple social networks coupled to the network 105, each having its own server and application.

The network 105 can be a conventional type, wired or wireless, and may have numerous different configurations including a star configuration, token ring configuration or other configurations. Furthermore, the network 105 may include a local area network (LAN), a wide area network (WAN) (e.g., the Internet), and/or other interconnected data paths across which multiple devices may communicate. In some implementations, the network 105 may be a peer-to-peer network. The network 105 may also be coupled to or includes portions of a telecommunications network for sending data in a variety of different communication protocols. In some implementations, the network 105 includes Bluetooth communication networks or a cellular communications network for sending and receiving data including via short messaging service (SMS), multimedia messaging service (MMS), hypertext transfer protocol (HTTP), direct data connection, WAP, email, etc.

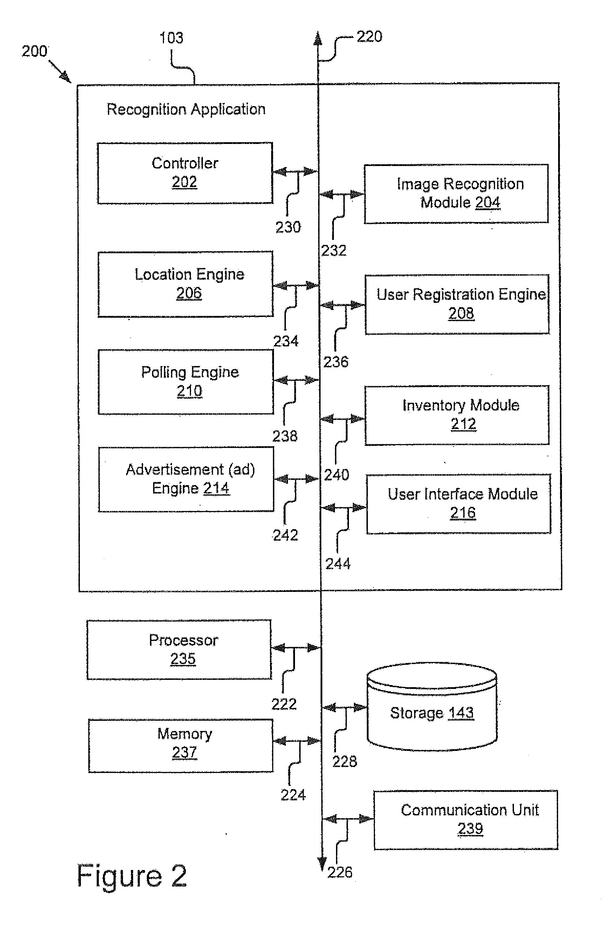

In one embodiment, the recognition application 103a may be operable on the recognition server 107, which is coupled to the network 105 via signal line 106. In some implementations, the recognition server 107 can be a hardware server that includes a processor, a memory and network communication capabilities. The recognition server 107 sends and receives data to and from other entities of the system 100 via the network 105. For example, the recognition server 107 sends and receives data to and from the user device 115 and the social network server 101. While Figure 1 includes one recognition server 107, the system 100 may include one or more recognition servers 107. The recognition server 107 also includes a storage device 143, which is described below in more detail with reference to Figure 2.

In another embodiment, the recognition application 103b may be stored on a user device 115a, which is connected to the network 105 via signal line 110. In some implementations, the user device 115a, 115n may be a computing device that includes a memory and a processor, for example a laptop computer, a desktop computer, a tablet computer, a mobile telephone, a personal digital assistant (PDA), a mobile email device or other electronic device capable of accessing a network 105. In some implementations, the user device 115a includes a browser (not shown) for accessing online services. In the illustrated implementation, the user 125a interacts with the user device 115a. The user device 115n is communicatively coupled to the network 105 via signal line 108. The user 125n interacts with the user device 115n. In some implementations, the recognition application 103b acts in part as a thin-client application that may be stored on the user device 115a, 115n and in part as components that may be stored on the recognition server 107. For example, the recognition server 107 stores profile data describing a user profile in the storage device 143 and generates a dynamic deal for the user 125a. The recognition application 103b sends instructions to a browser (not shown) for displaying the dynamic deal to the user on the user device 115a.

The recognition application 103 can be code and routines for performing actions after recognizing an image provided by a user. In some implementations, the recognition application 103 can be implemented using hardware including a field-programmable gate array (FPGA) or an application-specific integrated circuit (ASIC). In some other implementations, the recognition application 103 can be implemented using a combination of hardware and software. In some implementations, the recognition application 103 may be stored in a combination of the devices and servers, or in one of the devices or servers.

In one embodiment, the recognition application 103 registers a user and generates a user profile for the registered user. The recognition application 103 receives an image from the user and identifies a document associated with the image. For example, the recognition application 103 identifies a poll or an advertisement associated with the image. The recognition application 103 identifies a location of the user and performs actions based on one or more of the identified document and the user's location. For example, the recognition application 103 provides polling data describing a poll (e.g., a voting result for the poll) to the user. In another example, the recognition application 103 generates a dynamic deal for the user. The recognition application 103 is described below in more detail with reference to Figures 2 and 4-7.

### Recognition Application

Referring now to Figure 2, an example of the recognition application 103 is shown in more detail. Figure 2 is a block diagram of a computing device 200 that includes a recognition application 103, a processor 235, a memory 237 and a communication unit 239 according to some examples. In some implementations, the computing device 200 additionally includes a storage device 143. The components of the computing device 200 are communicatively coupled by a bus 220. In some implementations, the computing device 200 can be one of a user device 115 and a recognition server 107.

The processor 235 includes an arithmetic logic unit, a microprocessor, a general purpose controller or some other processor array to perform computations and provide electronic display signals to a display device. The processor 235 is coupled to the bus 220 for communication with the other components via signal line 222. Processor 235 processes data signals and may include various computing architectures including a complex instruction set computer (CISC) architecture, a reduced instruction set computer (RISC) architecture, or an architecture implementing a combination of instruction sets. Although Figure 2 includes a single processor 235, multiple processors 235 may be included. Other processors, operating systems, sensors, displays and physical configurations are possible.

The memory 237 stores instructions and/or data that can be executed by the processor 235. The memory 237 is coupled to the bus 220 for communication with the other components via signal line 224. The instructions and/or data may include code for performing the techniques described herein. The memory 237 may be a dynamic random access memory (DRAM) device, a static random access memory (SRAM) device, flash memory or some other memory device. In some implementations, the memory 237 also includes a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis.

The communication unit 239 transmits and receives data to and from at least one of the user device 115, the recognition server 107 and the social network server 101 depending upon where the recognition application 103 is stored. The communication unit 239 is coupled to the bus 220 via signal line 226. In some implementations, the communication unit 239 includes a port for direct physical connection to the network 105 or to another communication channel. For example, the communication unit 239 includes a USB, SD, CAT-5 or similar port for wired communication with the user device 115. In some implementations, the communication unit 239 includes a wireless transceiver for exchanging data with the user device 115 or other communication channels using one or more wireless communication methods, including IEEE 802.11, IEEE 802.16, BLUETOOTH® or another suitable wireless communication method.

In some implementations, the communication unit 239 includes a cellular communications transceiver for sending and receiving data over a cellular communications network including via short messaging service (SMS), multimedia messaging service (MMS), hypertext transfer protocol (HTTP), direct data connection, WAP, e-mail or another suitable type of electronic communication. In some implementations, the communication unit 239 includes a wired port and a wireless transceiver. The communication unit 239 also provides other conventional connections to the network 105 for distribution of files and/or media objects using standard network protocols including TCP/IP, HTTP, HTTPS and SMTP, etc.

The storage device 143 can be a non-transitory memory that stores data for providing the functionality described herein. The storage device 143 may be a dynamic random access memory (DRAM) device, a static random access memory (SRAM) device, flash memory or some other memory devices. In some implementations, the storage device 143 also includes a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis.

In the illustrated embodiment, the storage device 143 is communicatively coupled to the bus 220 via signal line 228. In one embodiment, the storage device 143 stores one or more of profile data describing a user profile, polling data describing a poll, inventory data describing inventory levels of one or more products at a location of a company, advertisement (ad) data describing an ad such as a banner and image data describing an image taken by a user. The storage device 143 may store other data for providing the functionality described herein.

A user profile is data describing a profile of a user. For example, a user profile includes a user identity (ID) identifying a user, demographic information associated with the user (e.g., age, gender, occupation, etc.), location data describing a location of the user and one or more user preferences (e.g., likes, dislikes, favorites, interests, etc.) obtained from a social network. In some embodiments, the user profile may include other data related to a user.

Polling data includes data related to a poll. For example, the polling data includes data describing one or more voting options and voting results in a poll, statistical data describing different voting results categorized in different categories and one or more comments posted in the poll. Examples of statistical data include, but are not limited to, a number of users that select a particular voting option, a number of users from a location that select a particular voting option, a number of users having a particular occupation that select a particular voting option, a number of users that like or dislike a particular voting option, etc. Example categories for categorizing the voting results include, but are not limited to, age, gender, location, time and date, occupation, education background, etc.

In the illustrated embodiment shown in Figure 2, the recognition application 103 includes a controller 202, an image recognition module 204, a location engine 206, a user registration engine 208, a polling engine 210, an inventory module 212, an advertisement (ad) engine 214 and a user interface module 216. The components of the recognition application 103 are communicatively coupled via the bus 220.

The controller 202 can be software including routines for handling communications between the recognition application 103 and other components of the computing device 200. In one embodiment, the controller 202 can be a set of instructions executable by the processor 235 to provide the functionality described below for handling communications between the recognition application 103 and other components of the computing device 200. In another embodiment, the controller 202 can be stored in the memory 237 of the computing device 200 and can be accessible and executable by the processor 235. In either embodiment, the controller 202 can be adapted for cooperation and communication with the processor 235 and other components of the computing device 200 via signal line 230.

In one embodiment, the controller 202 sends and receives data, via the communication unit 239, to and from one or more of a user device 115, a social network server 101 and a recognition server 107. For example, the controller 202 receives, via the communication unit 239, a registration request for registering a user from a user device 115 and sends the registration request to the user registration engine 208. In another example, the controller 202 receives graphical data for providing a user interface to a user from the user interface module 216 and sends the graphical data to a user device 115, causing the user device 115 to present the user interface to the user.

In one embodiment, the controller 202 receives data from components of the recognition application 103 and stores the data in the storage device 143. For example, the controller 202 receives profile data describing a user profile from the user registration engine 208 and stores the profile data in the storage device 143. In another embodiment, the controller 202 retrieves data from the storage device 143 and sends the data to components of the recognition application 103. For example, the controller 202 retrieves data describing an ad associated with a product or a vendor from the storage device 143 and sends the data to the ad engine 214.

The image recognition module 204 can be software including routines for recognizing an image. In one embodiment, the image recognition module 204 can be a set of instructions executable by the processor 235 to provide the functionality described below for recognizing an image. In another embodiment, the image recognition module 204 can be stored in the memory 237 of the computing device 200 and can be accessible and executable by the processor 235. In either embodiment, the image recognition module 204 can be adapted for cooperation and communication with the processor 235 and other components of the computing device 200 via signal line 232.

In one embodiment, the image recognition module 204 receives an image of a printed material from a user device 115 and determines whether the quality of the image is sufficient for identifying a corresponding mixed media reality (MMR) object stored in an MMR database (not shown). The image recognition module 204 dynamically modifies the quality of the received image.

MMR objects are electronic versions of source material, such as a book, an educational supplement, a document, a poster, a newspaper, a banner, etc. The MMR database stores the MMR objects. In one embodiment, the MMR objects are indexed by the MMR database according to the source material, the electronic representation of the source document and an action or second media, such as a link. The MMR database indexes the MMR objects using, for example, a unique object ID, a page ID, an x-y location of a patch of text, a hotspot or an image within a document, the width and height of a rectangular region within a document, features such as two-dimensional arrangements of text and images within the document, actions, clusters, etc. In one embodiment, the MMR database also stores relevant information about each MMR object, for example, font styles and sizes of a document, print resolution etc.

The image recognition module 204 extracts one or more features from the received image. Examples of the extracted features include, but are not limited to, invisible junctions, Scale Invariant Feature Transform (SIFT) features, corner features, salient points, ascenders, descenders, word boundaries and spaces, etc. The image recognition module 204 performs a visual search using the received image to identify a matching MMR object from the MMR database based on the extracted features. For example, the image recognition module 204 performs a visual search using the received image and identifies the image as being a voting option for a poll, which indicates that the user has selected the voting option. In another example, the image recognition module 204 performs a visual search using the image and identifies an ad such as a banner that includes the image.

The image recognition module 204 determines whether the recognition is successful. If the recognition is successful, the image recognition module 204 retrieves the MMR object from the MMR database. For example, the image recognition module 204 retrieves data describing one or more of an identified poll, a voting option of an identified poll selected by a user, an identified ad such as a banner, etc., from the MMR database. If the recognition is unsuccessful, the image recognition module 204 receives another image from the user device 115 and performs a visual search using the other image to identify a matching MMR object. Responsive to a successful recognition, the image recognition module 204 transmits the MMR object (e.g., an identified poll, a voting option of an identified poll selected by a user, an identified ad such as a banner, etc.) to one or more of the polling engine 210, the inventory module 212 and the ad engine 214.

The location engine 206 can be software including routines for determining a location associated with a user. In one embodiment, the location engine 206 can be a set of instructions executable by the processor 235 to provide the functionality described below for determining a location associated with a user. In another embodiment, the location engine 206 can be stored in the memory 237 of the computing device 200 and can be accessible and executable by the processor 235. In either embodiment, the location engine 206 can be adapted for cooperation and communication with the processor 235 and other components of the computing device 200 via signal line 234.

In one embodiment, the location engine 206 identifies a location associated with a user using global positioning system (GPS) coordinates. For example, the location engine 206 receives data describing GPS coordinates from a user device 115 (e.g., a mobile phone) with consent from a user, and determines a location associated with the user using the received GPS coordinates. In one embodiment, the location engine 206 sends location data describing the user's location to the polling engine 210 and/or the ad engine 214. In another embodiment, the location engine 206 stores the location data in the storage device 143.

The user registration engine 208 can be software including routines for registering a user. In one embodiment, the user registration engine 208 can be a set of instructions executable by the processor 235 to provide the functionality described below for registering a user. In another embodiment, the user registration engine 208 can be stored in the memory 237 of the computing device 200 and can be accessible and executable by the processor 235. In either embodiment, the user registration engine 208 can be adapted for cooperation and communication with the processor 235 and other components of the computing device 200 via signal line 236.

In one embodiment, the user registration engine 208 receives a registration request from a user device 115 operated by a user. The user registration engine 208 generates data describing a registration form for the user and sends the data to the user interface module 216, causing the user interface module 216 to generate graphical data for providing a user interface that depicts the registration form. The user interface module 216 sends the graphical data to the user device 115, causing the user device 115 to present the user interface to the user. The user can input personal information (e.g., a user name, password, age, gender, occupation, address, interests, hobbies, likes, dislikes, etc.) in the user interface and send the personal information to the user registration engine 208. The user registration engine 208 generates a user profile for the user that includes the personal information inputted by the user. For example, the user profile includes demographic information inputted by the user.

In one embodiment, the user registration engine 208 retrieves social data describing social activities performed on a social network from the social network server 101 with the consent of users, and determines one or more user preferences for a user based on the social activities. In some implementations, the social activities are performed by the user. For example, the user registration engine 208 retrieves social data describing the user's acknowledgements (e.g., likes, dislikes, favorites, etc.), posts, comments, shares, etc., related to one or more products, services or vendors from the social network. In some implementations, the social activities are performed by other users that are connected to the user in a social graph. For example, the user registration engine 208 retrieves social data describing acknowledgements, comments, shares, etc., related to one or more products, services or vendors that are performed by the user's friends on a social network. The user registration engine 208 determines one or more user preferences for the user based on the retrieved social data. In one embodiment, the one or more user preferences are included in a user profile associated with the user.

In another embodiment, the user registration engine 208 retrieves data describing one or more interests of the user from the social network, and determines one or more user preferences based on the user's interests. In yet another embodiment, the user registration engine 208 retrieves data describing one or more interests of other users (e.g., friends) that are connected to the user in a social graph from the social network, and determines one or more user preferences based on the interests of other users connected to the user.

The polling engine 210 can be software including routines for managing a poll. In one embodiment, the polling engine 210 can be a set of instructions executable by the processor 235 to provide the functionality described below for managing a poll. In another embodiment, the polling engine 210 can be stored in the memory 237 of the computing device 200 and can be accessible and executable by the processor 235. In either embodiment, the polling engine 210 can be adapted for cooperation and communication with the processor 235 and other components of the computing device 200 via signal line 238.

In one embodiment, the polling engine 210 receives one or more MMR objects such as an identified poll and a voting option of the poll selected by a user from the image recognition module 204. The polling engine 210 retrieves demographic information associated with the user from the storage device 143. The polling engine 210 associates the voting option selected by the user and the demographic information of the user with the poll and generates polling data describing the association. For example, the polling engine 210 tracks the user's vote and the user's demographic information, and adds the user's vote to exiting votes for the selected voting option. For example, assume a question in a poll is "Which movie do you like?" with a first voting option for Movie A (e.g., an image from Movie A) and a second voting option for Movie B (e.g., an image from Movie B). A registered user Alex who is a 20-year old college student from California takes a snapshot for the image from Movie A and sends the snapshot to the image recognition module 204. The image recognition module 204 identifies the image as a voting option for the poll and sends the identified voting option (e.g., Alex's vote for Movie A) to the polling engine 210. The polling engine 210 adds Alex's vote to the total number of existing votes for Movie A. The polling engine 210 retrieves Alex's demographic information (e.g., 20 years old, college student, California, etc.) from the storage device 143 and associates his demographic information and his vote with the poll.

In one embodiment, the polling engine 210 processes different votes for a poll from different users and generates polling data describing different voting results that are organized in different categories. For example, the polling engine 210 generates polling data describing one or more of a number of users that select a particular voting option, a number of users from a particular location that select a particular voting option, a number of users having a particular occupation that select a particular voting option, a number of users that like or dislike a particular voting option, etc. In some implementations, the polling data includes demographic information associated with users that have provided at least an answer to the poll. For example, the polling data indicates that 90% of the users voting for a first option have an annual income less than $100,000 and 80% of the users voting for a second option have an annual income above $100,000.

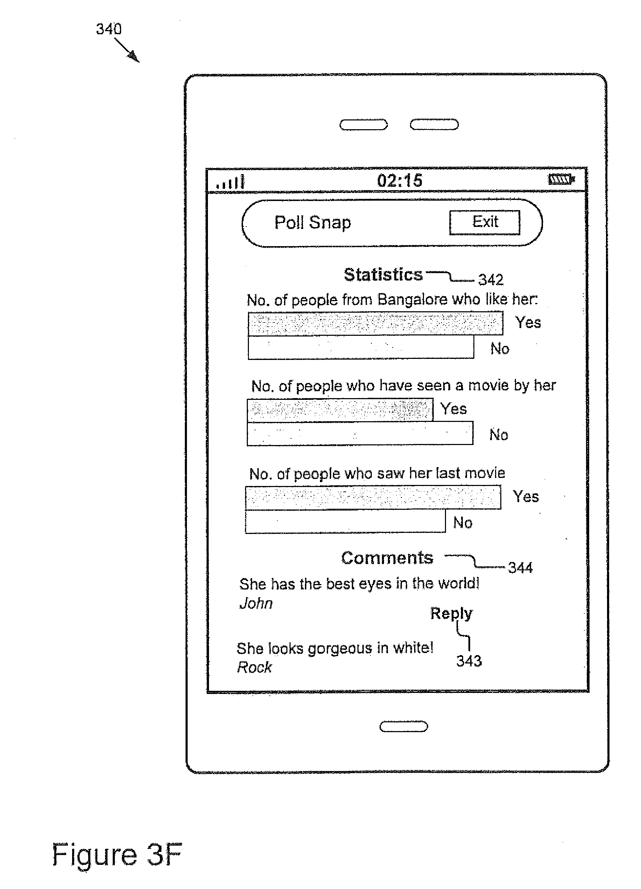

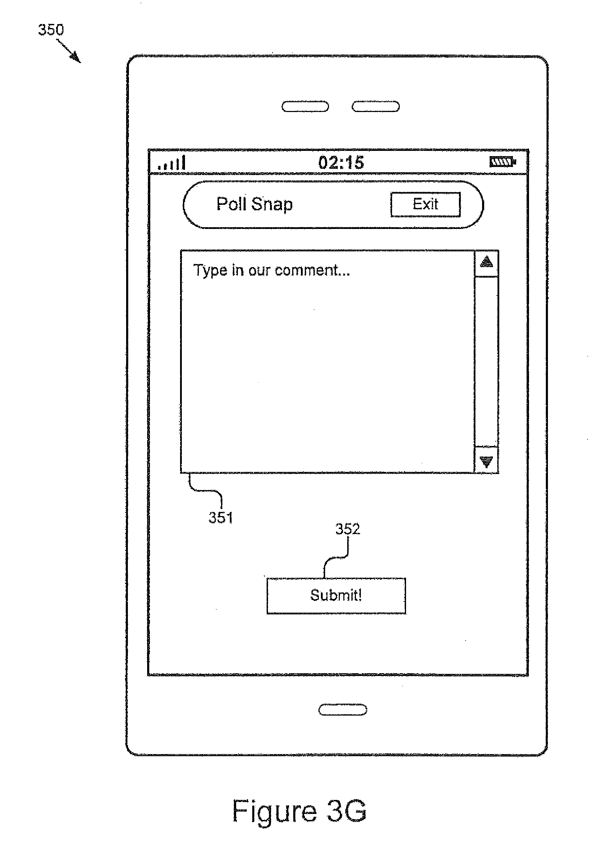

In one embodiment, the polling engine 210 manages comments for a poll that are posted by users who have voted in the poll. For example, the polling engine 210 associates a user's comment with the user's vote and provides an option for other users to reply to the user's comment. The polling engine 210 aggregates comments from users and provides the comments as part of the voting results, allowing users to view and reply to the comments in the voting results. Example user interfaces that allow a user to view and reply to a comment are illustrated with reference to Figures 3F and 3G.

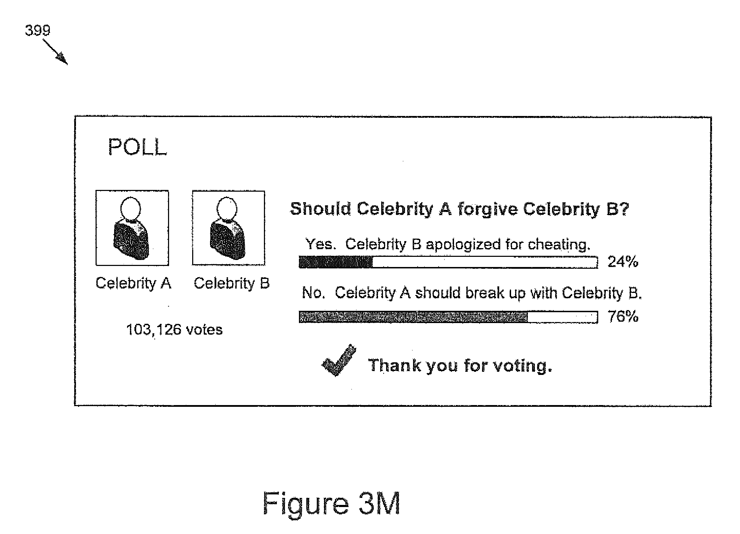

In one embodiment, the polling engine 210 provides one or more voting results and/or comments to a user that participates in a poll. For example, the polling engine 210 instructs the user interface module 216 to generate graphical data for providing a user interface depicting the voting results. The user interface module 216 sends the graphical data to a user device 115, causing the user device 115 to present the voting results to the user via the user interface. Example user interfaces are illustrated in Figures 3F and 3M. In some implementations, the user interface optionally includes one or more ads targeted for the user. In one embodiment, the polling engine 210 provides live voting results to the user.

In one embodiment, the polling engine 210 provides monetization strategies to a publisher of a poll or other advertisers. For example, the polling engine 210 sends a user ID identifying a user that has participated in a poll and the user's vote to the ad engine 214, causing the ad engine 214 to determine ads targeted for the user. The polling engine 210 instructs the ad engine 214 to provide the targeted ads to the user when the user views the voting results, revisits the poll or participates in other polls. Example ads include, but are not limited to, a video, a photo, a banner, a message or a deal, etc., for advertising a product or a vendor. The ad engine 214 is described below in more detail.

The inventory module 212 can be software including routines for managing an inventory for a product or a vendor. In one embodiment, the inventory module 212 can be a set of instructions executable by the processor 235 to provide the functionality described below for managing an inventory for a product or a vendor. In another embodiment, the inventory module 212 can be stored in the memory 237 of the computing device 200 and can be accessible and executable by the processor 235. In either embodiment, the inventory module 212 can be adapted for cooperation and communication with the processor 235 and other components of the computing device 200 via signal line 240.

In one embodiment, the inventory module 212 receives an MMR object (e.g., an identified ad such as a banner) from the image recognition module 204. The inventory module 212 receives location data describing a location of a user from the location engine 206. The inventory module 212 identifies a product and/or a company associated with the ad. For example, the inventory module 212 identifies a company that advertises the product using the ad. The inventory module 212 identifies an inventory at a location of the company. For example, the inventory module 212 determines an inventory at a local store of the company. In another example, the inventory module 212 identifies a set of locations for the company, selects a first location from the set of locations that is the nearest location to the user's location, and determines an inventory at the first location.

In one embodiment, the inventory is an inventory for a product advertised in the identified ad. In another embodiment, the inventory is an inventory for another product from the same company as the product advertised in the ad. In yet another embodiment, the inventory is an overall inventory for the vendor or the company advertising the ad. The overall inventory includes, for example, inventories for all the products in stock at the location of the company.

In one embodiment, the inventory module 212 sends data describing the inventory to the ad engine 214. In another embodiment, the inventory module 212 stores the data describing the inventory in the storage device 143.

The ad engine 214 can be software including routines for determining an ad. In one embodiment, the ad engine 214 can be a set of instructions executable by the processor 235 to provide the functionality described below for determining an ad. In another embodiment, the ad engine 214 can be stored in the memory 237 of the computing device 200 and can be accessible and executable by the processor 235. In either embodiment, the ad engine 214 can be adapted for cooperation and communication with the processor 235 and other components of the computing device 200 via signal line 242.

In one embodiment, the ad engine 214 receives a user ID identifying a user that participates in a poll and a voting option selected by the user from the polling engine 210. The ad engine 214 customizes one or more ads targeted for the user based on one or more of the voting option selected by the user, user interests, user preferences and demographic information associated with the user. For example, if a voting option selected by the user is a movie directed by a famous director, the ad engine 214 selects an ad that advertises another movie directed by the same director for the user. In another example, if the demographic information indicates that a user is a college student, the ad engine 214 selects an ad for the user that advertises a most popular product among college students. The ad engine 214 provides the targeted ad to the user when the user views the voting results, revisits the same poll or participates in other polls.

In one embodiment, the ad engine 214 receives an MMR object (e.g., an identified ad such as a banner) from the image recognition module 204. The ad engine 214 receives data describing an inventory at a location of a company associated with the ad from the inventory module 212. For example, the ad engine 214 receives data describing an inventory at a location of a company that is closest to the user's location. The ad engine 214 retrieves a user profile associated with the user from the storage device 143. The user profile includes demographic information and one or more user preferences (e.g., likes, dislikes, etc.) associated with the user. The ad engine 214 determines a current time of the day.

In one embodiment, the ad engine 214 generates a dynamic deal for the user based on one or more of the inventory, the user profile, the time of the day, a target time to clear the inventory and a total number of prospective purchasers. A prospective purchaser is, for example, a user that has obtained a deal and is likely to use the deal. In some implementations, a dynamic deal is a deal personalized for a user. For example, a dynamic deal is a deal customized for a user based on the user profile and/or a distance between the user's location and the location of the company. In another example, a dynamic deal is a deal providing discounts to products that match the user's preferences. In some other implementations, a dynamic deal is a deal that changes over time. For example, a dynamic deal is a deal modified based on one or more of an inventory and the time of the day, etc. For example, if the time of the day is 9:00 AM and the inventory level indicates that there are fifty items in stock, the ad engine 214 generates a deal with a 30%-off discount for users that have endorsed some of the items on a social network. If the time of the day is 4:00 PM and the inventory level indicates that there are still forty items in stock, the ad engine 214 modifies the deal to have a 60%-off discount for the users.

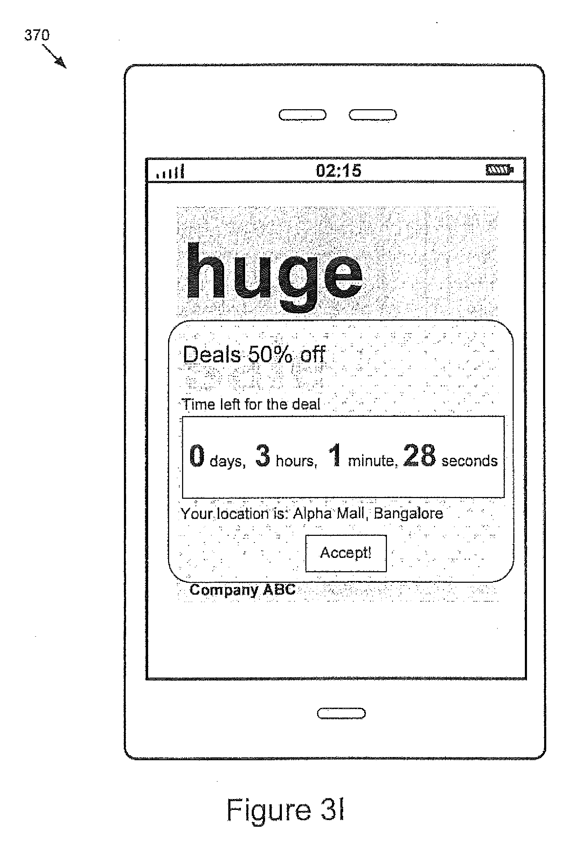

In some implementations, the ad engine 214 determines a dynamic deal for a user which is valid for a fixed time period. For example, the ad engine 214 generates a deal for a user with a 50%-off discount valid for a fixed time period such as from 12:00 PM to 3:00 PM on the current day. An example deal for a fixed time period is illustrated in Figure 3I. The deal valid for a fixed time period is advantageous because it attracts users to make purchases before the deal expires.

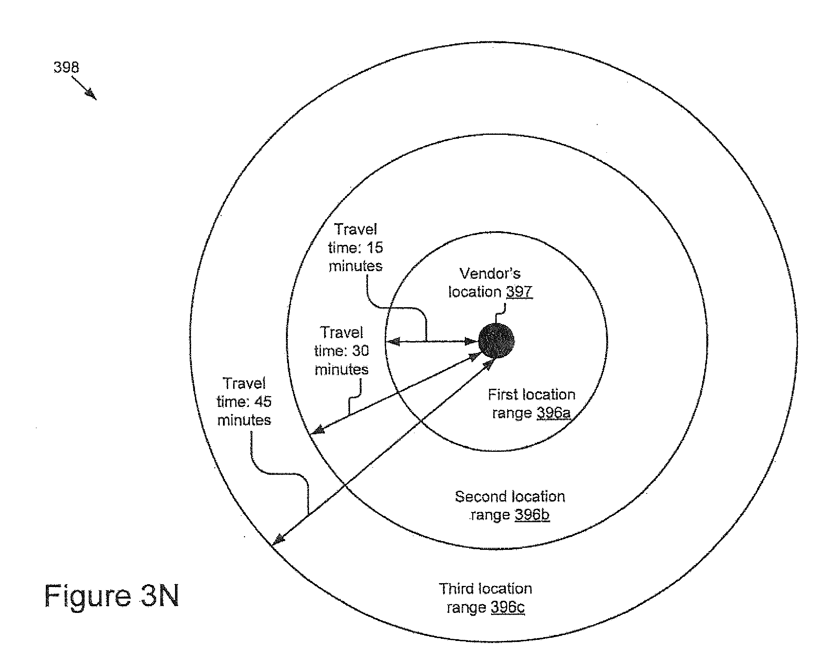

In one embodiment, the ad engine 214 determines a location of the vendor that is closest to the user's location and determines a catchment area for the location of the vendor. A catchment area is a geographic area served by a location of a vendor or a company. For example, a catchment area is a local area where 98% of customers at a vendor's local store come from. In another example, a catchment area is a geographic area within a predetermined driving range from a vendor's location (e.g., an area within a 3-hour driving time from the vendor's location). In one embodiment, the ad engine 214 divides a catchment area into one or more location ranges. For example, a catchment area includes a first location range within a 15-minute travel time from the user's location to the vendor's location, a second location range with a travel time between 15 minutes and 30 minutes from the user's location to the vendor's location and a third location range with a travel time between 30 minutes and 1 hour from the user's location to the vendor's location. Example location ranges in a catchment area are illustrated in Figure 3N.

In some implementations, the ad engine 214 determines a discount model for the location of the vendor. A discount model is data used to determine a discount in a deal for a user. For example, the discount model is a location-based discount model that includes different discounts for users from different location ranges within a catchment area. In another example, the discount model indicates to offer users from a first location range (e.g., within a 15-minute travel time) with a first discount (e.g., 10% off) and users from a second location range (e.g., within a travel time between 15 minutes and 30 minutes) with a second discount (e.g., 20% off). Optionally, a discount model includes a targeted number of sales to achieve within each location range. An example discount model is illustrated in Table 1.

**Table 1: discount model**

| **Discount offered** | **Location range in catchment area** | **Targeted sales** |
|---|---|---|
| 10% | With a travel time less than 15 minutes | 30 |
| 20% | With a travel time between 15 minutes and 30 minutes | 30 |
| 30% | With a travel time between 30 minutes and 45 minutes | 25 |
| 40% | With a travel time between 45 minutes and 1 hour | 15 |

In one embodiment, the ad engine 214 determines a discount model for the vendor's location (e.g., a location of the vendor nearest to the user's location) based on one or more associations among users' willingness to travel, discounts offered by the vendor, and a distance between the users' location and the location of the vendor. For example, the ad engine 214 determines a discount model based on: (1) users close by the location of the vendor are likely to become actual purchasers when a lower discount is offered; and (2) users farther away from the location of the vendor are likely to travel to the vendor's location and become actual purchasers when a higher discount is offered.

In another embodiment, the ad engine 214 determines a discount model based on an inventory of the vendor, a targeted number of sales within a particular location range, a conversion rate of users that have obtained a historic deal provided by the vendor, and a maximum discount that can be offered to the users. For example, a discount offered in a discount model cannot exceed the maximum discount configured by a vendor. In another example, if a conversion rate of users that have obtained a historic deal is below a threshold such as 0.05, the ad engine 214 may generate higher discounts in a discount model in order to increase the conversion rate. A conversion rate is a ratio between users that become actual purchasers using an offered deal and users that are offered the deal. In some embodiments, the offering includes the user receiving the offer, for example, through an email or a link to the offer. In some other embodiments, the users that are offered the deal both received and downloaded the offer.

In one embodiment, the ad engine 214 receives location data describing the user's location from the location engine 206 and generates a dynamic deal for the user based on one or more of the user's location, the inventory, a targeted number of sales within a particular location range and a conversion rate of users that have been offered a historic deal by the vendor. For example, the ad engine 214 determines a distance between the user's location and the location of the vendor, and determines a deal for the user from the discount model based on the distance. In another example, if the user's location is within a travel time of 15 minutes from the location of the vendor, the ad engine 214 generates a deal with a 10%-off discount for the user by referring to Table 1 described above. In yet another example, if a travel time from the user's location to the location of the vendor is 2 hours and the maximum discount offered by the vendor is 40% off for a travel time between 45 minutes and 1 hour, the ad engine 214 generates a deal with a 40%-off discount for the user even if the user's travel time is above 1 hour. In one embodiment, the discount is tied to the user's profile so that other users that are closer by cannot use the discount if, for example, the first user emails it to the other users.

In some implementations, if the targeted number of sales within a location range is achieved, the ad engine 214 will not offer a user that comes from the location range with a discount configured for the location range. The ad engine 214 may offer other discounts to the user. For example, assume users from a location range having a travel time between 15 minutes and 30 minutes are offered with a 20%-off discount and a targeted number of sales for the location range have been achieved. If there is another user from the same location range requesting for a deal, the ad engine 214 may generate a deal for the other user having a 10%-off discount, where the 10%-off discount is configured for a location range with a travel time less than 15 minutes.

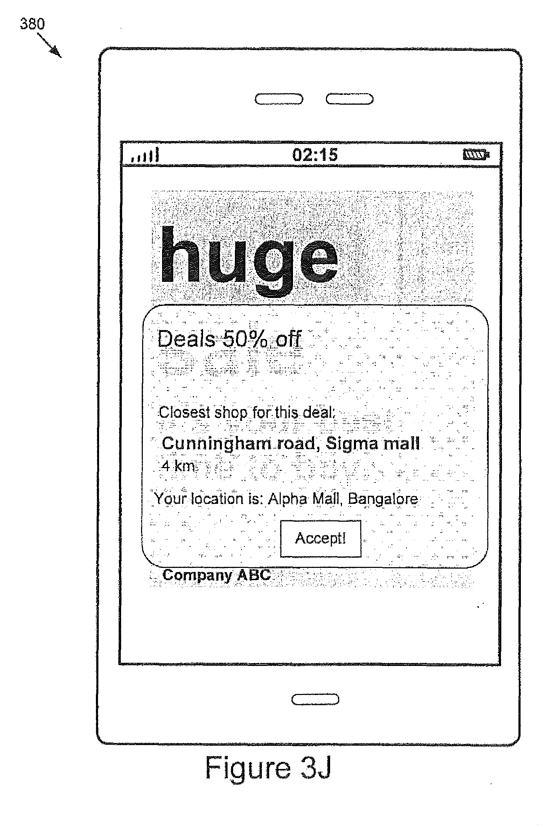

In one embodiment, the ad engine 214 provides the dynamic deal to the user. For example, the ad engine 214 instructs the user interface module 216 to generate graphical data for providing a user interface depicting the deal. The user interface module 216 sends the graphical data to a user device 115, causing the user device 115 to present the deal to the user via the user interface. Example user interfaces are illustrated in Figures 3I and 3J. In some implementations, a user is standing in front of an electronic banner and the user interface module 216 sends the graphical data to the banner, causing the banner to present the deal to the user. A banner is any sign that displays, for example, a billboard, an advertisement in front of a store, etc. An electronic banner displays changing information.

The user interface module 216 can be software including routines for generating graphical data for providing a user interface. In one embodiment, the user interface module 216 can be a set of instructions executable by the processor 235 to provide the functionality described below for generating graphical data for providing a user interface. In another embodiment, the user interface module 216 can be stored in the memory 237 of the computing device 200 and can be accessible and executable by the processor 235. In either embodiment, the user interface module 216 can be adapted for cooperation and communication with the processor 235 and other components of the computing device 200 via signal line 244.

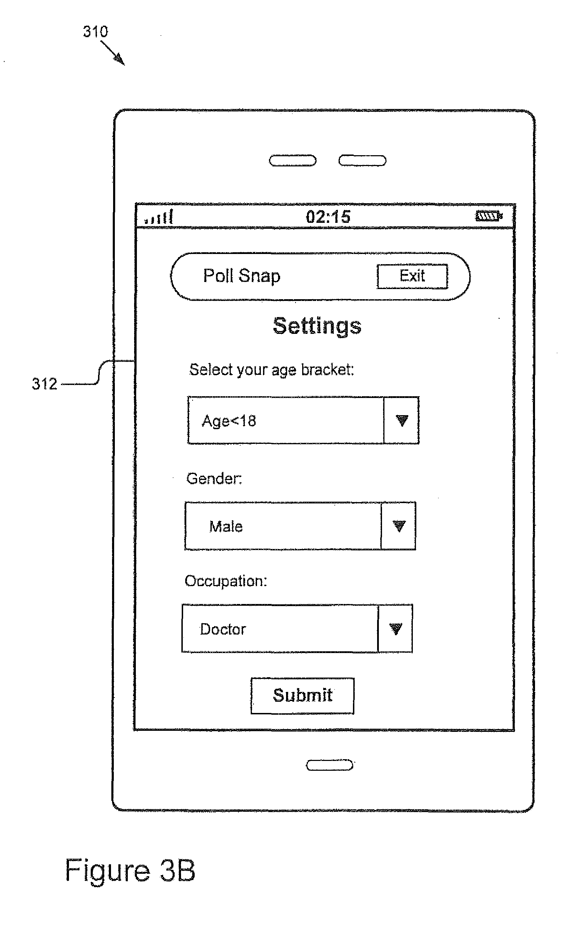

In one embodiment, the user interface module 216 generates graphical data for providing a user interface that depicts a registration form. The user interface module 216 sends the graphical data to a user device 115 operated by a user, causing the user device 115 to present the registration form to the user via the user interface. An example user interface is illustrated in Figure 3B. In another embodiment, the user interface module 216 generates graphical data for providing a user interface that depicts a deal to a user. In yet another embodiment, the user interface module 216 generates graphical data for providing a user interface that presents one or more voting results in a poll to a user. In other embodiments, the user interface module 216 may generate graphical data for providing other user interfaces to users.

An example use of the recognition application 103 includes the following example scenario: a vendor in a mall aiming to clear an inventory of 2,000 items in a day advertises deals using banners in the mall. In one embodiment, the banners are electronic banners and are capable of displaying dynamic deals to users in near real time. The location engine 206 determines a location of a user that is standing in front of a banner using GPS coordinates received from a user device 115 (e.g., a mobile phone) operated by the user. The user registration engine 208 determines a user ID identifying the user based on data received from the user device 115 and retrieves a user profile including demographic information and user preferences associated with the user. The user registration engine 208 sends the user profile to the ad engine 214. The ad engine 214 determines a dynamic deal for the user based on one or more of the user profile, the time of day and the current inventory, etc. The ad engine 214 sends data describing the dynamic deal to the banner, causing the banner to present the dynamic deal to the user that is standing in front of the banner.

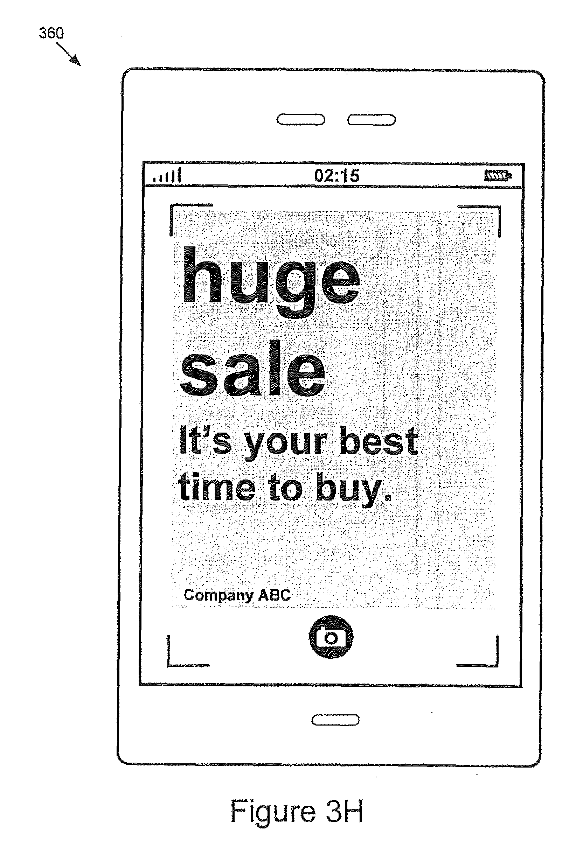

In another embodiment, the banners are static banners. Each banner displays a promotion ad from the vendor and an option for the user to take an image of the promotion ad using a user device 115 in order to check out current deals available from the vendor. An example image of a promotion ad taken by a user is illustrated in Figure 3H. If a user takes an image of the promotion ad and sends the image to the recognition application 103, the image recognition module 204 identifies the image as one associated with the promotion ad and sends the identified promotion ad to the inventory module 212. The inventory module 212 determines an inventory for the vendor and sends the inventory to the ad engine 214. The ad engine 214 determines dynamic deals for the user based on one or more of the user profile, the time of day and the current inventory, etc. The ad engine 214 sends data describing the dynamic deals to the user device 115, causing the user device to present the dynamic deals to the user.

In some implementations, the dynamic deals can be modified over time and customized for different users. For example, a first user takes a snapshot for the banner at 11:00 AM may be presented with a deal having a 40%-off discount valid from 11:00 AM to 11:30 AM. Assume that there are five hundred users taking snapshots of the promotion ad and two hundred fifty of them turning into actual purchasers by 12:00 PM. Subsequently, the vendor increases the discount to be 50% off. A second user takes a snapshot for the banner at 12:40 PM may be presented with a deal having a 50%-off discount valid from 12:40 PM to 1:40 PM. For this deal, there are seven hundred users taking snapshots of the promotion ad and four hundred fifty of them turning into actual purchasers by 2:00 PM.

The vendor may continue to modify the deal again based on the user profile, the time of the day, a conversion rate related to the deal and the remaining inventory. When the vendor has reached the targeted inventory level (e.g., the vendor has sold out all the items), the deal can be removed and other product information can be displayed to users that take snapshots of the promotion ad. This implementation of the dynamic deals is advantageous because, for example, it allows a vendor to track possible purchases in real time and therefore to modify discount strategies based on the tracking results.

Another example use of the recognition application 103 includes the following example scenario: a vendor aiming to clear an inventory of one hundred items advertises deals using banners at bus stops or newspapers. The ad engine 214 generates a discount model similar to that described by Table 1 for the vendor. A user takes an image of a banner using a user device 115 and sends the image to the recognition application 103. The location engine 206 determines a location of the user. The image recognition module 204 recognizes the image as a promotion ad from the vendor. The inventory module 212 determines a current inventory of the vendor. The ad engine 214 determines a distance and a driving time between the user's location and a location of the vendor, and generates a deal for the user from the discount model. The user interface module 216 generates graphical data for providing the deal to the user and sends the graphical data to the user device 115, causing the user device 115 to present the deal to the user.

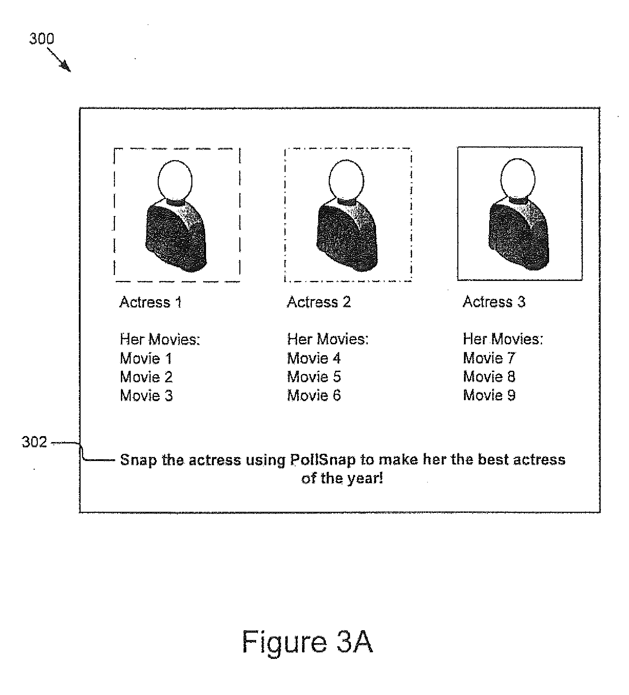

An additional example use of the recognition application 103 is illustrated with reference to Figures 3A-3G.

### Graphic Representations

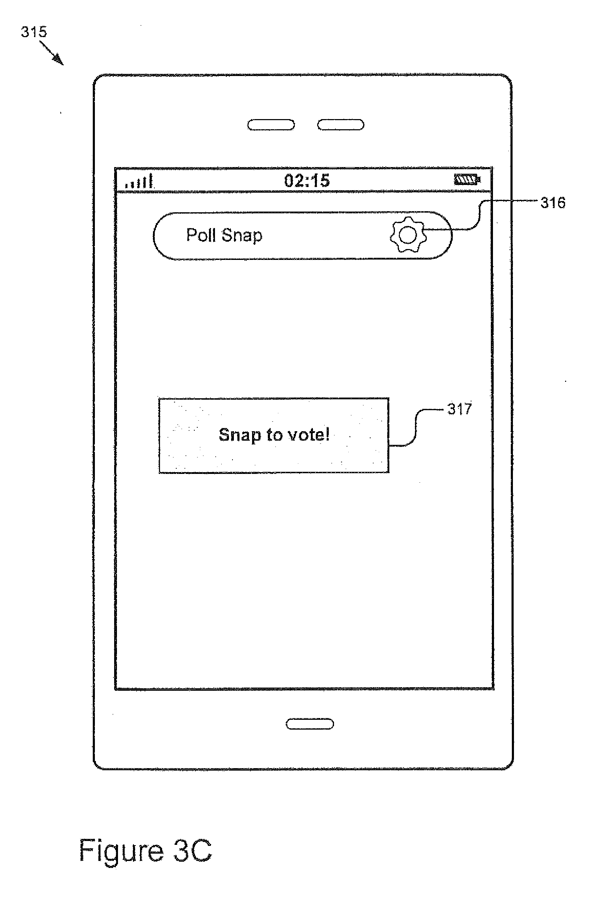

Figures 3A-3G are graphic representations 300, 310, 315, 320, 330, 340, 350 of embodiments of user interfaces for conducting a poll using visual search. In the illustrated embodiment shown in Figure 3A, a publisher prints an article about Hollywood actresses on a printed media such as a banner, a newspaper, a magazine, a book, etc. The article includes multiple images each depicting an actress and invites a user to select the best actress of the year by taking a snapshot of an image on the article. For example, the article includes a section 302 describing "Snap the actress using PollSnap to make her the best actress of the year." The publisher creates hotspots on the images, allowing users to vote for the best actress of the year using a user device 115 (e.g., a mobile phone) as shown in Figures 3C-3G. A hotspot is, for example, a polygon on an image. The hotspots identify the (x,y) coordinates of polygons on a document image and links to electronic data such as uniform resource locator's (URL's) that are associated with each polygon.

Referring to Figure 3B, a user opens an application named "Poll Snap" on a user device 115. An example user interface 312 is presented to the user on the user device 115, allowing the user to register with the application. For example, the user can provide demographic information such as age, gender and occupation to the user registration engine 208 via the user interface 312.

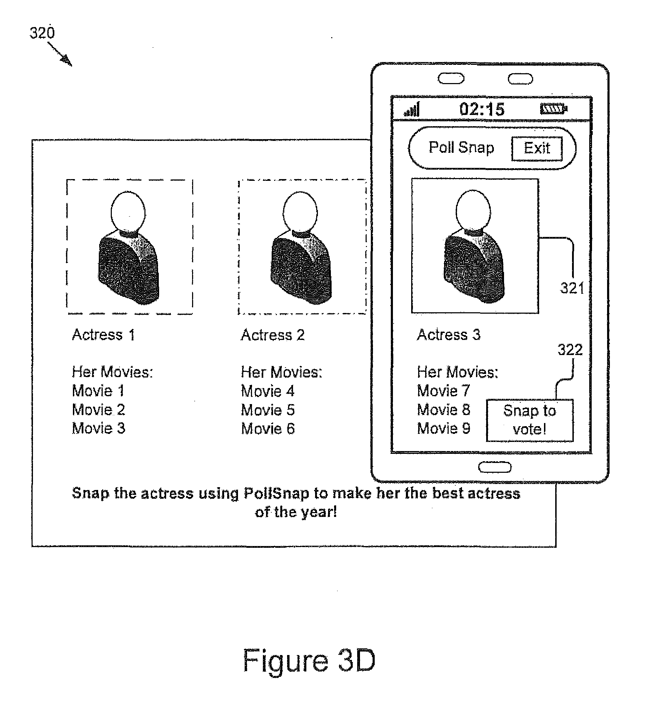

Referring to Figure 3C, an example user interface allowing a user to start a voting process is illustrated. A user that uses the application Poll Snap for the first time can select an icon 316 to learn more detail about the application. For example, if a user selects the icon 316, a demo regarding the voting process can be presented to the user. By clicking on a "Snap to vote" button 317, the user can focus on a voting option that he or she wants to choose. For example, as illustrated in Figure 3D, the user can hover over an image 321 which represents a voting option for the poll. The user can click on a "Snap to Vote" button 322 to take a snapshot of the voting option using a camera installed in the user device 115, which indicates the user has selected the voting option. In one embodiment, if the user has already voted for the poll, the user can click on the image 321 to view voting results for the poll.

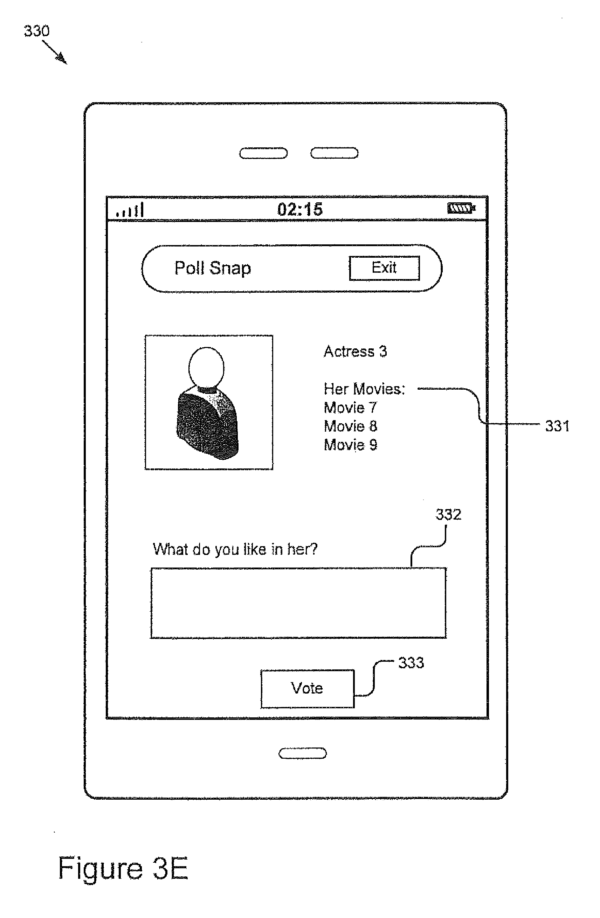

Figure 3E illustrates an example user interface describing a voting option selected by a user by clicking on the "Snap to Vote" button 322 shown in Figure 3D. The example user interface also includes a description 331 for the voting option and a box 332 that allows the user to add a comment for the voting option. For example, a user can type or write down the reasons why he or she selects this voting option in the box 332. The user can click on a "Vote" button 333 to submit the vote to the recognition application 103. In one embodiment, each user can only vote once for a poll.

Upon completion of the voting process, the user can view one or more voting results such as a number of users who have voted in the poll, a percentage of votes per actress, one or more comments posted by users that have voted in the poll, a number of votes per actress by location, by gender or by age of voters, etc. In one embodiment, the user can view the voting results and reply to comments by hovering over the voting option again using the user device 115 and clicking on the voting option. For example, after voting for the actress depicted in the image 321, the user can hover over the image 321 using the user device 115 as shown in Figure 3D and click on the image 321 to view the voting results.

The implementation that allows user interactions after voting is beneficial because it attracts users to revisit the poll again. A lifetime of the poll can be extended because users can continue to make comments even after the polling period expires. The publisher of the poll can monetize the revisits of the poll by providing targeted ads to the returning users.

Figure 3F illustrates an example user interface for providing one or more voting results to the user. The example user interface includes a section 342 describing statistical data associated with a voting option selected by the user and a section 344 describing one or more comments associated with the voting option. The user can reply to a comment by clicking on a "reply" button 343.

Figure 3G illustrates an example user interface for replying to a comment. For example, after a user clicks on the "reply" button 343 shown in Figure 3F, the example user interface shown in Figure 3G is presented to the user. The user can type in his or her comment in a box 351 and clicks on a "Submit" button 352 to send the comment to the recognition application 103.

Figures 3H-3J are graphic representations 360, 370, 380 of different embodiments of user interfaces for providing a dynamic deal to users using visual search. Figure 3H illustrates an image of a banner taken from an example promotion ad by a user. Figure 3I illustrates a deal for a user having a 50%-off discount for a fixed time period within 3 hours 1 minute and 28 seconds. Figure 3J illustrates a deal for a user having a 50%-off discount at a closest shop at Cunningham road, Sigma mall with a distance of 4 kilometers from the user's location.

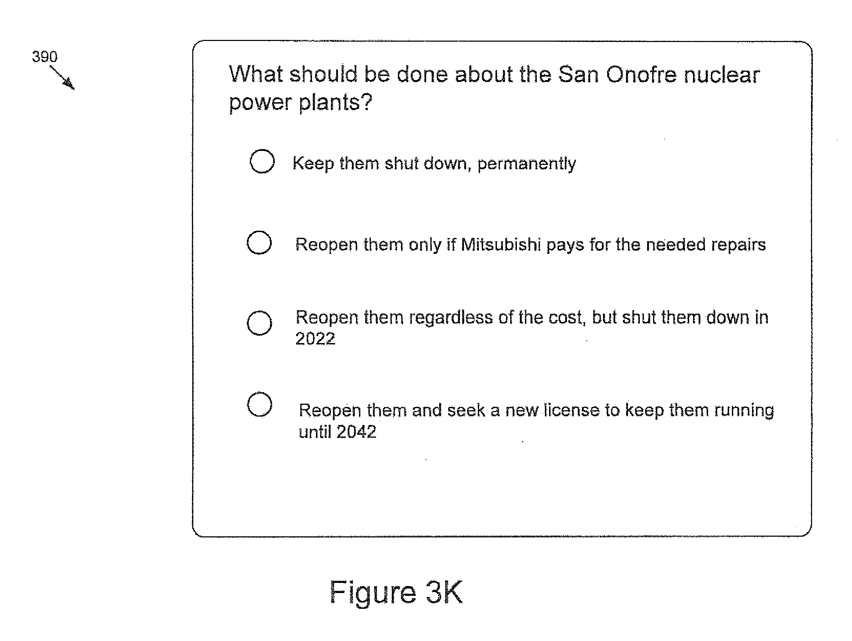

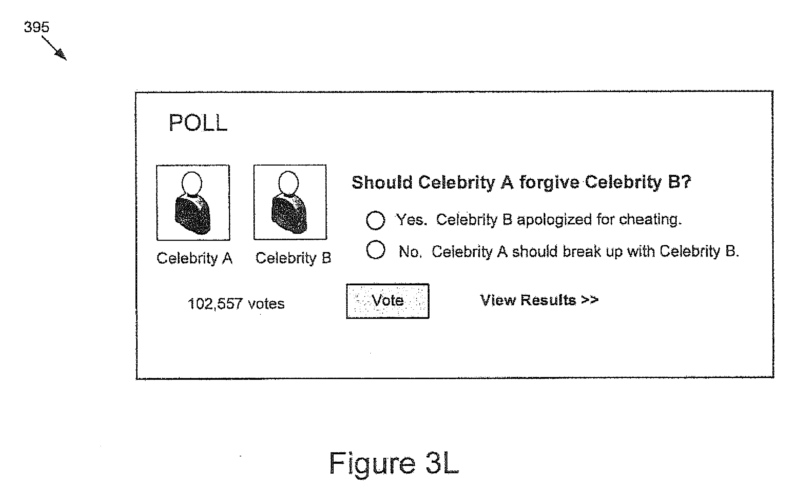

Figures 3K-3M are graphic representations 390, 395, 399 of different embodiments of user interfaces for conducting a poll using visual search. Figure 3K illustrates an example user interface describing a poll and four voting options for the poll. Figure 3L illustrates another example user interface describing another poll with two voting options. Figure 3M illustrates an example user interface describing a current state of a poll. For example, the example user interface indicates that 24% of the voters select "Yes" and 76% of the voters select "No."

Figure 3N is a graphic representation 398 of one embodiment illustrating one or more location ranges in a catchment area for a location of a vendor. A first location range 396a is an area within a 15-minute travel time from a vendor's location 397. A second location range 396b is an area having a travel time between 15 minutes and 30 minutes from the vendor's location 397. A third location range 396c is an area having a travel time between 30 minutes and 45 minutes from the vendor's location 397.

### Methods

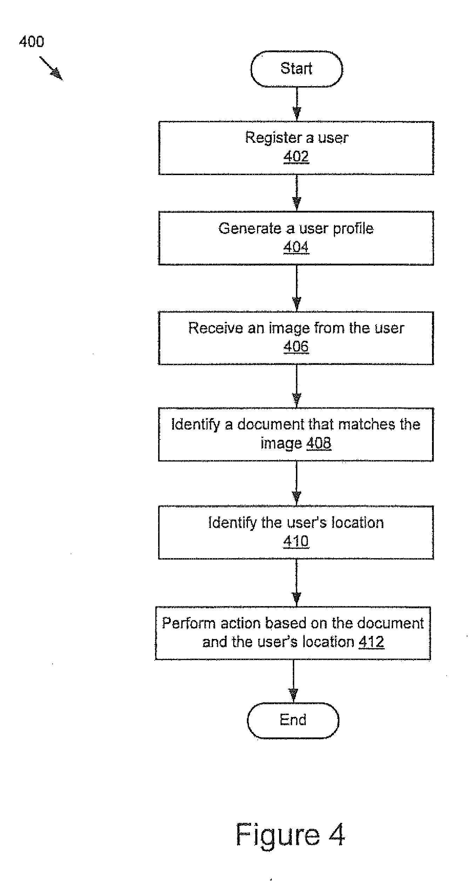

Figure 4 is a flow diagram of one embodiment of a method 400 for performing actions using visual search. In some implementations, the user registration engine 208 registers 402 a user. The user registration engine 208 generates 404 a user profile for the user. The controller 202 receives 406 an image from the user. The image recognition module 204 identifies 408 a document that matches the image. For example, the image recognition module 204 identifies a poll or an ad that matches the image. The location engine 206 identifies 410 the user's location. For example, the location engine 206 identifies the user's current location. The polling engine 210 and/or the ad engine 214 perform 412 actions based on the document and the user's location.

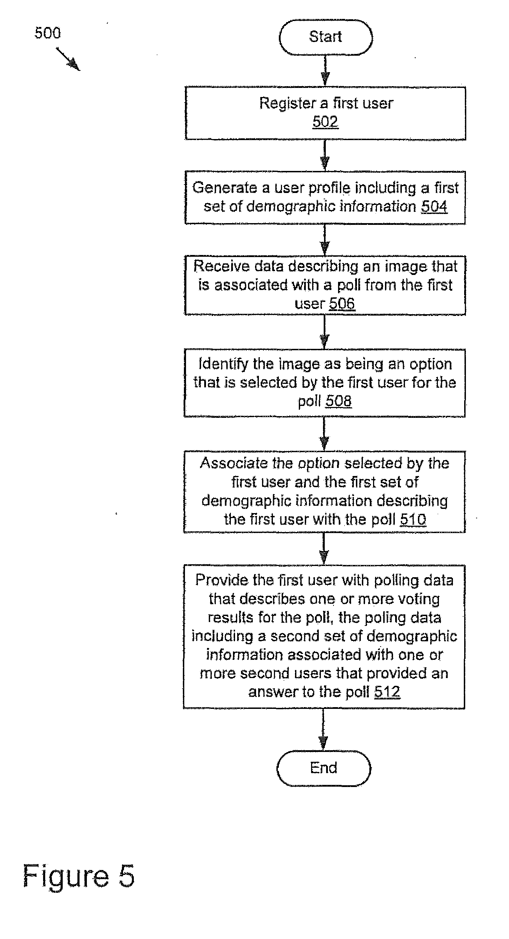

Figure 5 is a flow diagram of one embodiment of a method 500 for conducting a poll using visual search. The user registration engine 208 registers 502 a first user. The user registration engine 208 generates 504 a user profile that includes a first set of demographic information associated with the first user. The controller 202 receives 506 data describing an image that is associated with a poll from the user. The image recognition module 204 identifies 508 the image as being an option that is selected by the first user for the poll. The polling engine 210 associates 510 the option selected by the first user (e.g., the user's vote) and the first set of demographic information describing the first user with the poll. The polling engine 210 provides 512 the first user with polling data that describes one or more voting results for the poll. The polling data includes a second set of demographic information associated with one or more second users that provided an answer to the poll. For example, the ad engine 214 provides the first user with an advertisement associated with the option selected by the first user. For example, the polling engine 210 provides the first user with comments associated with the poll.

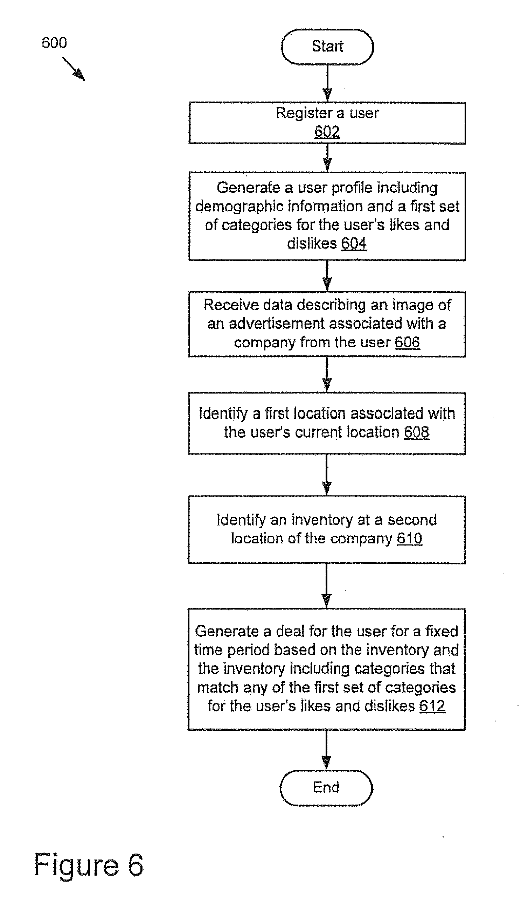

Figure 6 is a flow diagram of one embodiment of a method 600 for providing a dynamic deal to a user for a fixed time period. The user registration engine 208 registers 602 a user. The user registration engine 208 generates 604 a user profile including demographic information and a first set of categories for the user's likes and dislikes. For example, the user explicitly or implicitly states that the user is interested in running. The controller 202 receives 606 data describing an image of an advertisement associated with a company from the user. The location engine 206 identifies 608 a first location associated with the user's current location. The inventory module 212 identifies 610 an inventory at a second location of the company. For example, the second location is the company's nearest location to the first location. In one embodiment, the inventory module 212 determines a category for the inventory that corresponds to likes and dislikes associated with the user profile. For example, the user profile indicates that the user likes running and the inventory module 212 identifies inventory as being within the running category (e.g. running shoes, running pants, heart rate monitory, etc.). The ad engine 214 generates 612 a deal for the user for a fixed time period based on the inventory and the inventory including categories that match any of the first set of categories for the user's likes and dislikes. In some embodiments, the deal is also based on demographic information in the user profile corresponding to the inventory. For example, the user is a sixty year old woman and, as a result, the ad engine 214 identifies available inventory purchased by women in a similar age group.

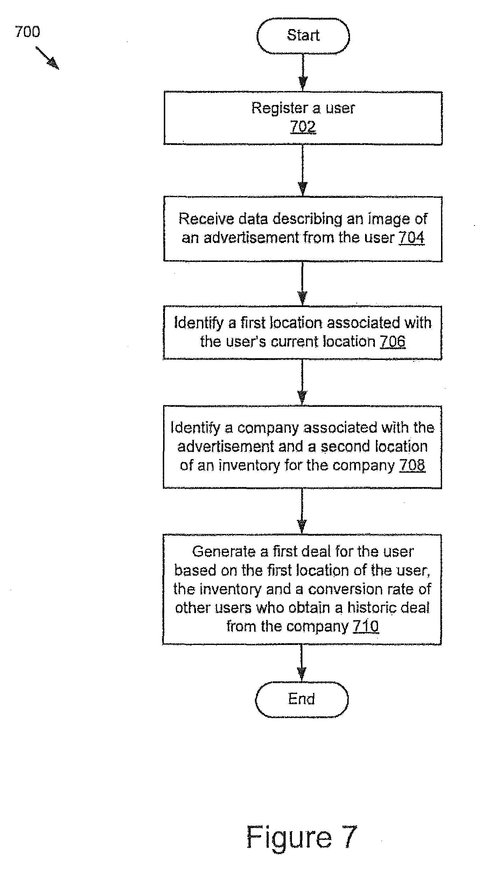

Figure 7 is a flow diagram of one embodiment of a method 700 for providing a dynamic deal to a user based on a location associated with the user. The user registration engine 208 registers 702 a user. The controller 202 receives 704 data describing an image of an advertisement from the user. The location engine 206 identifies 706 a first location associated with the user's current location. The inventory module 212 identifies 708 a company associated with the advertisement and a second location of an inventory for the company. For example, the second location of the inventory is the nearest location where the user can purchase inventory from the company. The ad engine 214 generates 710 a first deal for the user based on the first location of the user, the inventory and a conversion rate of other users who obtain a historic deal from the company.

The foregoing description of the embodiments has been presented for the purposes of illustration and description. It is not intended to be exhaustive or to limit the specification to the precise form disclosed. Many modifications and variations are possible in light of the above teaching. It is intended that the scope of the embodiments be limited not by this detailed description, but rather by the claims of this application. As will be understood by those familiar with the art, the examples may be embodied in other specific forms without departing from the spirit or essential characteristics thereof. Likewise, the particular naming and division of the modules, routines, features, attributes, methodologies and other aspects are not mandatory or significant, and the mechanisms that implement the description or its features may have different names, divisions and/or formats. Furthermore, as will be apparent to one of ordinary skill in the relevant art, the modules, routines, features, attributes, methodologies and other aspects of the specification can be implemented as software, hardware, firmware or any combination of the three. Also, wherever a component, an example of which is a module, of the specification is implemented as software, the component can be implemented as a standalone program, as part of a larger program, as a plurality of separate programs, as a statically or dynamically linked library, as a kernel loadable module, as a device driver, and/or in every and any other way known now or in the future to those of ordinary skill in the art of computer programming. Additionally, the specification is in no way limited to implementation in any specific programming language, or for any specific operating system or environment. Accordingly, the disclosure is intended to be illustrative, but not limiting, of the scope of the specification, which is set forth in the following claims.

## Claims

1. A computer-implemented method comprising:
receiving, with one or more processors, data describing an image of an advertisement associated with a company from the user;
identifying, with the one or more processors, a first location associated with the user's current location; and
generating, with the one or more processors, a deal for the first user for a fixed time period based on the inventory of the company and the first location associated with the user.

2. The method of claim 1, wherein the deal is also based on a conversion rate of other users who obtain a historic deal from the company.

3. The method of claim 1, further comprising identifying a second location of the inventory and wherein the deal is based on the second location of the inventory.

4. The method of claim 3, further comprising determining a catchment area into which the user's first location falls and wherein the deal is further based on a travel time from the user to travel from the catchment area to the second location of the inventory.

5. The method of claim 1, further comprising generating a user profile including a first set of categories for the user's likes and dislikes and wherein the deal is also based on the inventory including categories that match any of the first set of categories for the user's likes and dislikes.

6. The method of claim 1, wherein the user profile also includes demographic information and the deal is also based on identifying inventory based on the demographic information.

7. The method of claim 1, wherein the deal is generated further based on a time of a day, a target time to clear the inventory and a total number of prospective purchasers.

8. A system (100) comprising:
one or more processors (235);
an image recognition module (204) configured to receive data describing an image of an advertisement associated with a company from the user;
a location engine (206) configured to identify a first location associated with the user's current location; and
an ad engine (214) configured to generate a deal for the first user for a fixed time period based on the inventory of the company and the first location associated with the user.

9. The system of claim 8, wherein the deal is also based on a conversion rate of other users who obtain a historic deal from the company.

10. The system of claim 8, wherein the location engine is further configured to identify a second location of the inventory and wherein the deal is based on the second location of the inventory.

11. The system of claim 10, wherein the ad engine is further configured to determine a catchment area into which the user's first location falls and wherein the deal is further based on a travel time from the user to travel from the catchment area to the second location of the inventory.

12. The system of claim 8, further comprising a user registration engine (208) configured to generate a user profile including a first set of categories for the user's likes and dislikes and wherein the deal is also based on the inventory including categories that match any of the first set of categories for the user's likes and dislikes.

13. The system of claim 8, wherein the user profile also includes demographic information and the deal is also based on identifying inventory based on the demographic information.

14. The system of claim 8, wherein the deal is generated further based on a time of a day, a target time to clear the inventory and a total number of prospective purchasers.

15. A computer program arranged to implement the method of any of claims 1-7.
